# EUROPEAN PATENT APPLICATION

(11) **EP 4 390 376 A1**
(43) Date of publication of application: **26.06.2024**
(21) Application number: 22306979.0
(22) Date of filing: 21.12.2022
(51) Int. Cl.: G01N 21/64, G01N 21/03

(54) **AN IMPROVED METHOD FOR PERFORMING FLUORESCENCE MEASUREMENT ON A SAMPLE**

(71) Applicant: BIOMÉRIEUX, 69280 Marcy L'Etoile (FR)
(72) Inventor: ROSSI, Veronica Lucia, 50139 Florence (IT); SANESI, Antonio, 50126 Florence (IT); FERORELLI, Giuseppe, 50133 Florence (IT); CHINI, Giorgio, 50012 Bagno a Ripoli (IT); MECOCCI, Alessandro, 50144 Florence (IT); ANDREINI, Paolo, 53100 Siena (IT); BONECHI, Simone, 53034 Colle di Val d'Elsa (IT)
(74) Representative: Plasseraud IP

(57) **Abstract**

It is disclosed a method for performing fluorescence measurement on a sample, comprising:
- Illuminating the sample using a light source,
- acquiring at least one fluorescence image of the illuminated sample, and
- processing the fluorescence image to determine a fluorescence intensity of the sample,
characterized in that processing the fluorescence image to determine a fluorescence intensity of the sample comprises:
- extracting, from the fluorescence image, a region of interest (ROI) free from artefacts, by application of a trained model, and
- determining the fluorescence intensity of the sample from the extracted region of interest.

## Description

### TECHNICAL FIELD

The present disclosure relates to a method and system for performing fluorescence measurement on a sample. It may in particular be applied to the determination of the presence of a biological analyte or to the quantification of said analyte.

### BACKGROUND OF THE INVENTION

In many in-vitro diagnosis systems and other biological applications, it is known to detect presence of an analyte, or perform quantitative determination of the analyte concentration, through a fluorescence measurement. Fluorescence is the ability from matter to emit light at a certain wavelength after absorbing electromagnetic radiation. Accordingly, a fluorescence measurement is performed by illuminating the sample, which is contained in a reading cuvette, at a selected excitation wavelength which corresponds to the excitation wavelength of an analyte of interest, and detecting and measuring the fluorescence emission of the sample induced by the excitation.

In order to obtain a reliable value of the concentration of the analyte of interest, the detection and processing of the fluorescence signals must be performed with precision. However, the measurement of the fluorescence emission can be affected by artefacts such as dust, bubbles, or even from the walls of the cuvette, which may have their own fluorescence contribution.

It is known from the document WO 2014/102502 a method of analyzing a sample, comprising detecting a first fluorescence signal from a cuvette before introduction of a reaction medium into the cuvette, and a second fluorescence signal from the cuvette after introduction of the reaction medium, and comparing the two signals to obtain a signal corresponding solely to the reaction medium.

This method, although enabling to remove the fluorescence contribution from the cuvette, does not ensure that the obtained signal is not affected by artefacts such as dust or bubbles.

### DESCRIPTION OF THE INVENTION

The present disclosure aims at improving the prior art.

In particular, an aim of the present disclosure is to improve the precision of a fluorescence signal acquired on a sample.

Another aim of the present disclosure is to enable correcting the fluorescence measurement from contributions caused by artefacts such as bubbles or dust. Accordingly, it is disclosed a method for performing fluorescence measurement on a sample, comprising:
- Illuminating the sample using a light source,
- acquiring at least one fluorescence image of the illuminated sample, and
- processing the fluorescence image to determine a fluorescence intensity of the sample,
characterized in that processing the fluorescence image to determine a fluorescence intensity of the sample comprises:
- extracting, from the fluorescence image, a region of interest free from artefacts, by application of a trained model, and
- determining the fluorescence intensity of the sample from the extracted region of interest.

In embodiments, the method further comprises acquiring a plurality of fluorescence images of the sample with respectively different combinations of illumination and exposures, selecting one among the plurality of fluorescence images, and processing the selected fluorescence image to determine a fluorescence intensity of the sample. In embodiments, selecting one among the plurality of fluorescence images comprises:
- for each acquired fluorescence image, determining a number of saturated pixels, and
- selecting a fluorescence image whose number of saturated pixels is below a predetermined threshold.

In embodiments, the plurality of fluorescence images are acquired under different illumination intensities, and the selected image is the acquired fluorescence image with highest illumination intensity whose number of saturated pixels is below the predetermined threshold.

In embodiments, determining the fluorescence intensity of the sample comprises measuring an intensity of a fluorescence signal on the selected image, and deriving, from said intensity and the conditions of illumination and exposure of acquisition of the selected image, the fluorescence intensity of the sample.

In embodiments, the method further comprises extracting, from the fluorescence image, at least one other region corresponding to at least one category of artefact.

In embodiments, determining the fluorescence intensity of the sample from the extracted region of interest comprises computing an intensity of a fluorescence signal of the regions of the fluorescence image outside the region of interest by extrapolating the intensity of the fluorescence signal of the region of interest to said regions.

In embodiments, extracting the region of interest from the fluorescence image comprises performing semantic segmentation on the fluorescence image.

In embodiments, extracting the region of interest comprises applying, to the fluorescence image, a trained classification model configured to classify pixels of the fluorescence image according to a plurality of classes comprising at least:
- one class corresponding to the absence of artefact, and
- at least one other class corresponding to one among the following artefacts:
   ∘ bubble,
   ∘ shadow,
   ∘ dust,
   ∘ background
   and wherein the region of interest is formed by the pixels classified as corresponding to the absence of artefact.

In embodiments, the method further comprises a preliminary step of training the classification model by supervised learning on a training database comprising, for each of a plurality of training fluorescence images, an identification of the areas corresponding to artefacts, wherein each trained fluorescence image is rescaled by a randomly selected factor inferior or equal to 1 and cropped to a constant size.

In embodiments, the trained model is a convolutional neural network.

In embodiments, the trained model is a Segmentation Multiscale Attention Network, comprising:
- A convolutional encoder,
- An intermediate module configured to process the output of the convolutional encoder at a plurality of different scales, and
- A decoder.

According to another aspect, it is disclosed a system for performing a fluorescence measurement on a sample, wherein the sample is contained in a cuvette, the system comprising:
- An illumination device configured for illuminating the cuvette with at least one determined wavelength,
- A detection device configured for acquiring at least one fluorescence image comprising fluorescence emissions of the sample consecutive to its illumination by the light source, and
- A computing device, configured for processing the fluorescence image to determine a fluorescence intensity of the sample,
characterized in that the system is configured for implementing the method according to the description above.

The claimed method enables performing a fluorescence measurement from a region of interest extracted from the fluorescence image, wherein the region of interest is devoid of areas containing artefacts. The fluorescence measurement may then be performed more reliably.

The extraction of the region of interest may be performed by application of a trained model configured for performing semantic segmentation of the image, and classifying each pixel or group of pixels of the image as belonging to a region devoid of artefact or corresponding to a given type of artefact. The detection of the artefacts can then be performed automatically, even when the positions of the artefacts vary within the image.

Once the region of interest is extracted, and a fluorescence measurement is performed on said region, it is possible to extrapolate the fluorescence measurement to the parts of the fluorescence image that have been excluded in order to obtain a complete fluorescence measurement and hence to compute a fluorescence intensity of the sample.

In embodiments, the precision of the fluorescence intensity measurement is further enhanced by selecting the fluorescence image from which the region of interest is extracted, among a plurality of fluorescence images acquired for different illumination or acquisition conditions.

### DESCRIPTION OF THE DRAWINGS

Other features and advantages of the invention will be apparent from the following detailed description given by way of non-limiting example, with reference to the accompanying drawings, in which:
- Figure 1 represents an example of a system for performing a fluorescence measurement of a sample.
- Figure 2 schematically represents the main steps of a method for performing fluorescence measurement according to an embodiment,
- Figures 3a and 3b represent a first example of a semantic segmentation of a fluorescence image,
- Figures 4a and 4b represent a second example of a semantic segmentation of a fluorescence image,
- Figure 5 schematically represents the structure of a neural network that may be used for extracting the region of interest,
- Figure 6a represents an example of fluorescence signal measured on the region of interest, and Figure 6b represents an example of fluorescence signal computed over the regions of the image excluded from the region of interest, based on the fluorescence signal measured on the region of interest.
- Figure 7a represents a region of interest extracted from the fluorescence image, and figure 7b represents an image reconstructed from a fluorescence signal computed over the whole image based on the fluorescence signal measured on the region of interest.
- Figure 8 represents comparative fluorescence signals acquired from a cuvette before and after introduction of bubbles, and with or without application of the method according to an embodiment.

### DETAILED DESCRIPTION OF AT LEAST ONE EMBODIMENT

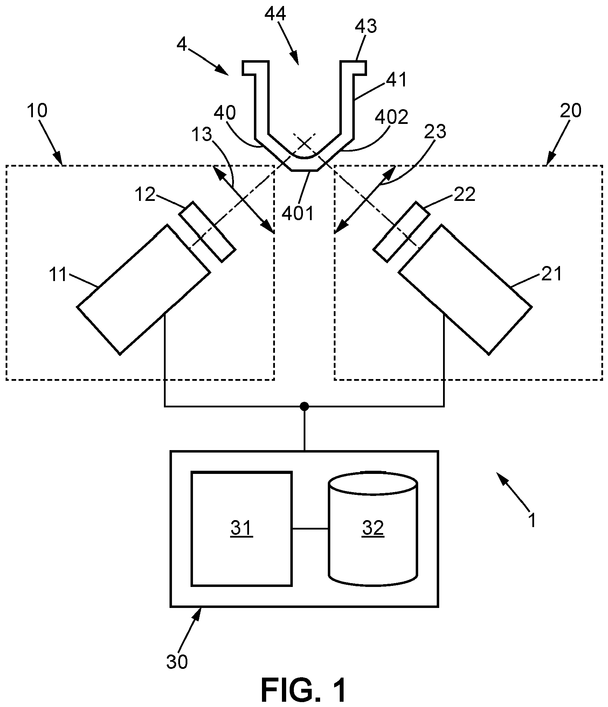

With reference to figure 1, is shown an example of a system for performing a fluorescence measurement on a sample. The sample may be from various origins, for example of food, environmental, veterinary, clinical, pharmaceutical or cosmetic origin.

Amongst the samples of food origin, non-exhaustive mention may be made of a sample of dairy products (yogurts, cheeses, ...), meat, fish, egg, fruit, vegetable, water, beverages (milk, fruit juice, soda, etc.). Of course, these samples of food origin may also come from sauces or more complex meals, or from unprocessed or partially processed raw materials. A food sample may also be derived from an animal feed, such as oil cakes, animal meals.

As indicated previously, the biological sample may be of environmental origin and may consist, for example, of a surface sample, water sample, etc.

The sample may also consist of a biological sample, of clinical, human or animal origin, which may correspond to specimens of biological fluid (urine, whole blood or derivatives such as serum, plasma, saliva, pus, cerebrospinal fluid, etc.), of stools (for example cholera-induced diarrhea), of specimens from the nose, throat, skin, wounds, organs, tissues or isolated cells. This list is obviously not exhaustive.

Generally, the term "sample" refers to a part or a quantity, and more particularly a small part or a small quantity, sampled from one or more entities for the purposes of analysis. This sample may possibly have undergone pre-treatment, including for example mixture, dilution or even crushing stages, in particular if the starting entity is solid-state. The analysed sample is likely to contain-or is suspected of containing-at least one analyte representative of the presence of microorganisms or of a disease to be detected, characterised or monitored.

For the purpose of performing the fluorescence measurement, the sample is contained in a cuvette 4. The cuvette comprises a bottom wall 40 and lateral walls 41 extending from the bottom wall towards an upper edge 43. The upper edge defines an aperture 44 suitable for filling and emptying the cuvette.

In embodiments, the bottom wall may comprise a bottom portion 401 extending orthogonally to the lateral walls, and oblique walls 402 extending between the bottom portion 401 and the lateral walls 41, the oblique walls forming an angle of 45° with the lateral walls. According to a non-limiting example, the bottom wall 40 may have the shape of truncated cone. The cuvette may be formed of a material suitable for conserving liquids and other materials necessary for performing a biological analysis. The cuvette 4 may for instance be formed of a plastic material. Moreover, the cuvette may be transparent to the wavelengths used for illuminating the sample, herein after called illumination wavelengths. It also may be transparent to the wavelengths emitted by the sample due to fluorescence. For instance, the cuvette may be formed of polypropylene, glass, polymetil metacrilate, polystyrene, polycarbonate and other optical plastics, depending on the illumination and fluorescence wavelength ranges. The system 1 for performing fluorescence measurements comprises an illumination device 10, comprising a light source 11 such as a light-emitting diode (LED). The light source 11 may comprise any monochromatic source corresponding to the wavelength of the excitation peak of the analyte, i.e. chemical molecule used as a marker, or sought for, within the sample. Alternatively, the light source 11 may be able to generate light at a plurality of wavelengths, for instance white light, and the illumination device may further comprise a filter 12 able to select at least one wavelength of interest corresponding to the excitation peak of a desired molecule. The illumination device may further comprise an optical element 13 adapted to conform the beam of illumination light according to a suitable shape. The optical element may for instance comprise at least one optical lens, such as an aspheric lens. The system 1 for performing fluorescence measurements also comprises a detection device 20 configured for acquiring at least one fluorescence image of the sample, the fluorescence image comprise a fluorescence signal emitted by the sample consecutive to its illumination by the light source. The detection device comprises a detector 21, such as a camera or high-sensitivity CMOS or CCD or other 2D optical sensor. The detection device may further comprise an optical element 23 adapted to conform a beam of light emitted by the sample in response to the illumination towards the detector. The optical element 23 may comprise an optical lens, for instance an aspheric lens. Moreover, the detection device may comprise an optical filter 22 adapted to limit the detection to a wavelength of interest or a narrow-band spectrum centered on the wavelength of interest, which may typically the fluorescence wavelength emitted by the analyte.

According to a non-limiting example, the illumination device may be configured to illuminate the cuvette 4 holding the sample with a ray of incident light forming an angle of 90° relative to the wall of the cuvette, in particular the oblique wall 402 of the cuvette forming an angle of 45° relative to the lateral walls 41 of the cuvette. The detection device 20 may be configured for collecting light exiting the cuvette from an oblique wall 402 therefrom, and forming an angle of 90° relative to said wall, the axes of illumination device and of the detector thus being positioned at 90° relative to one another.

According to another example, the illumination device and the detector may be positioned on the same side of the cuvette (i.e. axes of illumination light and detected light forming a null angle), or they may be positioned on two opposite sides of the cuvette (i.e. axes of illumination light and detected light forming a 180° angle), as the fluorescence is a radiation emitted at 360° from the sample molecule, independently of the illumination direction. In the latter case, the walls on which illumination light is incident and through which the fluorescence is measured can be the lateral walls 41.

The system 1 for performing fluorescence measurements also comprises a computing device 30 comprising at least a computer 31 and a memory 32. The computer 31 is adapted to control the operation of the illumination device and the detection device and receive from the latter the acquired fluorescence images acquired by the detection device 20. To this end, the computer 31 is connected to the detection device 20, and illumination device 10 either using a wire connection or wirelessly. The computer 31 is further adapted to process the acquired fluorescence images to compute a fluorescence intensity emitted by the sample in response to the illumination. To this end, the computer may execute code instructions stored in the memory 32 for performing the method disclosed below. The computer may comprise one or more processors, for instance Central Processing Units CPU or Graphical Processing Units GPU. The memory 32 may for instance include a magnetic hard disk, solid-state disk, optical disk, electronic memory or any type of computer-readable storage medium. The memory further stores a trained model configured for extracting a region of interest from a fluorescence image, as described in more details below.

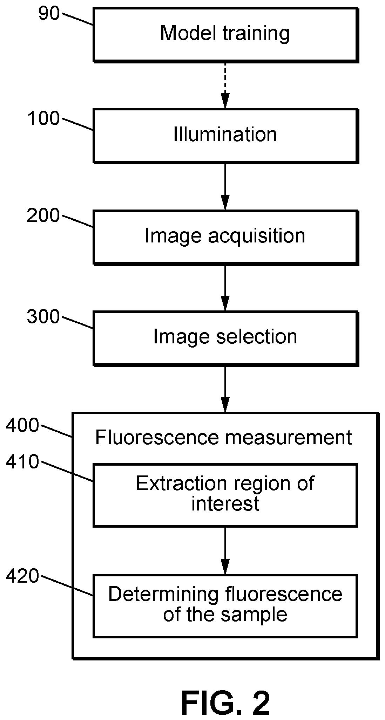

With reference to figure 2, the main steps of a method for performing a fluorescence measurement on a sample will now be described.

The method comprises the illumination 100 of the sample by the illumination device 10. The illumination may be performed at a selected wavelength which corresponds to an excitation wavelength, i.e. a wavelength suitable for inducing fluorescence, for the molecule of interest that the fluorescence measurement aims at detecting, quantifying or analyzing. The illumination may be continuous or by a plurality of flashes. The use of flashes may allow reducing the degradation of the sample. The illumination is also performed at defined conditions of illumination intensity. When the light source comprises a LED, the excitation intensity may be controlled by driving the input current of the LED.

The method further comprises the acquisition 200 of at least one fluorescence image of the illuminated sample by the detection device 20. The acquisition 200 may be performed while the sample is illuminated since the fluorescence starts almost instantaneously. The image acquisition is performed at determined acquisition parameters, including the detector gain and integration time, i.e. the time window inside which the camera collects light for a single image.

The acquired fluorescence image comprises a plurality of pixels where each pixel corresponds to a respective point of the cuvette, and each pixel is associated to an intensity, which may be expressed for instance as a grey level value or RGB values, said intensity corresponding to an intensity of a fluorescence signal issued from the cuvette. The fluorescence image is then processed in order to determine, from the fluorescence signal of the fluorescence image, a fluorescence intensity of the sample. In embodiments, the method comprises acquiring 200 a plurality of fluorescence images corresponding to different sets of parameters regarding illumination and acquisition. The sets of parameters that may vary in order to vary the exposure may include illumination intensity, sensor's gain, sensor's integration time.

In embodiments, the method comprises acquiring 200 a plurality of fluorescence images corresponding to different working points, where each working point is defined by illumination intensity and exposure, and exposure is determined by integration time and camera gain of image acquisition. The working points may be established in order to provide images with brightness values that are scale by a known multiplying factor. . Indeed, the fluorescence in the cuvette, according to the type of sample and the concentration of the analyte, can span over a very wide range (more than four orders of magnitude). As a consequence, the brightness, i.e. the level of light captured by a pixel during the reading performed with a given exposure and illumination intensities, may exceed the maximum readable value of the detector, Acquiring a plurality of fluorescence images under different exposures and illumination intensities may thus enable selecting the image with the most adapted brightness and hence providing the most information. Thus, between 2 and 10 fluorescence images, preferably between 2 and 5 fluorescence images, may be acquired with different exposures and illumination intensities.

According to an embodiment, the number of images and the working points may be selected to cover the range of fluorescence mentioned above. Thus, according to a non-limiting example, four images may be acquired with brightness values that are scaled by a multiplying factor of four. The inverse ratio between the brightness obtained at each working point and the brightness obtained at the most sensitive one is named "exposure factor"

When a plurality of images are acquired at steps 100 and 200, the method further comprises a step 300 of selecting a fluorescence image among the plurality of acquired images. The selection of a fluorescence image may be based on a condition on the number of saturated pixels in the image. A pixel is saturated if its intensity level is the maximum intensity value that the sensor can acquire. Thus the selection of a fluorescence image may comprise:
- Computing, for each acquired image, a number of saturated pixels, and
- Selecting the brightest image for which the number of saturated pixels is below a determined threshold.

For computing the number of saturated pixels, a lower threshold may be contemplated. For instance, a pixel may be considered saturated if its intensity value is above 90% of the maximum intensity value that the sensor can acquire.

The method then comprises processing 400 the fluorescence image to determine a fluorescence intensity of the sample. The fluorescence image here relates to the acquired fluorescence image, when one image has been acquired, or to the selected fluorescence image, when a plurality of images has been acquired and one has been selected at step 300.

Processing 400 the fluorescence image comprises extracting 410, from the fluorescence image, a region of interest ROI which is free from any artefacts, and determining 420 a fluorescence intensity of the sample from the extracted region of interest.

By "artefact" is meant a signal which does not correspond to the fluorescence of the analyte that is being measured. In the context of the present disclosure, artefact is meant to include any of the following:
- Bubbles present within the cuvette, which may be caused by the presence of other types of artefacts,
- Dust particles, which may include particles or peals or other inhomogeneities typical of the application
- Shadows, for instance shadow of bubbles present in the cuvette.
- Background, i.e. regions of the image that do not correspond to the illuminated region of the cuvette; in particular portions of the image corresponding to walls of the cuvette (apart from the wall extending perpendicular to the orientation of the detection device and which is crossed by the fluorescent light emitted

by the sample) and portions of the image surrounding the walls of the cuvette, Extracting 410 the region of interest free from artefacts is performed by application of a trained model. In embodiments, the trained model is configured for performing semantic segmentation of the image, i.e. to label each pixel of the image with a corresponding class. Here, the trained model is configured for labelling the pixels of the image with a corresponding class among at least two classes comprising:
- one class corresponding to regions devoid of artefacts, and
- one class corresponding to artefacts.

In a preferred embodiment, the model may be configured for labelling the pixels of the image with a corresponding class among a plurality of classes, comprising one class corresponding to regions devoid of artefacts and a plurality of other classes corresponding to respective artefacts.

For instance, the classes may comprise:
- at least one class corresponding to regions devoid of artefacts,
- one class corresponding to bubbles,
- crossed by the ray of fluorescent light)
- one class corresponding to dust particles,
- one class corresponding to shadows.
- One class corresponding to background (all the parts not included in the other used classes)

Defining one class per type of artefact enables greater precision in defining the region of interest.

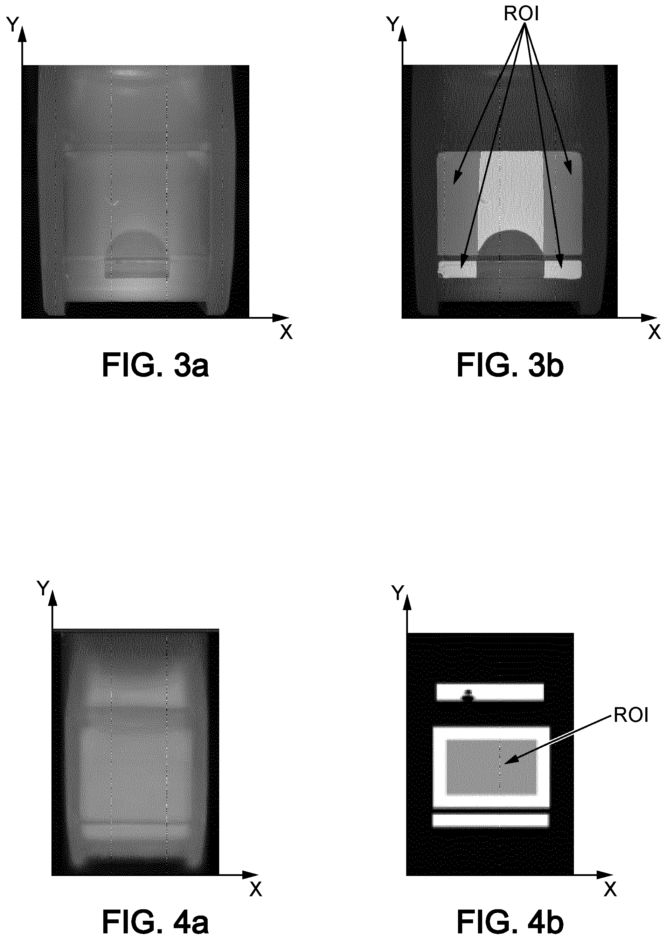

With reference to figures 3a and 3b, is shown a first example of semantic segmentation of an image. According to this example, the classes are defined as follows:
- two classes are defined regarding the regions of the cuvette that are devoid of artefacts, but which are located at different locations, one class is defined for bubbles,
- one class is defined for shadows, and
- one class is defined for the "Background", for all the parts not included in the previous classes(comprising walls)

The fluorescence image as acquired by the detection device is represented on figure 3a. On figure 3b is shown the segmentation map output by the trained model on this image. One can identify a bubble located at the bottom of the cuvette, which is identified on the segmentation map, and the shadow produced by the bubble in the direction of the light source. Only the regions that have been classified as devoid of artefacts are kept and form the region of interest ROI.

With reference to figures 4a and 4b, is shown a second example of semantic segmentation of a fluorescence image. According to this example, only two classes are defined, one class corresponding to artefacts and the other corresponding to regions devoid of artefacts. In figure 4a, the acquired image displays the walls of the cuvette. In figure 4b, the region of interest is located at the center of the image and excludes the walls of the cuvette.

Prior to executing the model on a fluorescence image, the model is trained 90 by supervised learning on a training database of fluorescence images, where each image of the database is annotated according to the desired definition of classes, i.e. the artefacts and regions of interests are indicated as such for each image. The fluorescence images of the training database may all have the same dimension. The annotation may be performed manually by an operator. The training of the model may be performed by the computing device 30 of the system, or by a distinct computing device (not shown).

Moreover, the model or its training may be designed to process the images at different scales.

According to an example, during the training, each image may be randomly rescaled by a factor comprised between 0 and 1, to better train the model to handle presence of objects and elements at different scales. For instance, each training image may be rescaled by a factor randomly selected among the following: 1, 0.8, or 0.6. From the rescaled images, random crops of a constant dimension are extracted and used to train the model. Therefore, the images used to train the model are of constant size but the size of the artefacts may vary.

Regarding the trained model, it is preferably a convolutional neural network.

In embodiments, in order to process the images at different scales, the convolutional neural network may comprise:
- a convolutional encoder section,
- a multiscale module, i.e. an intermediate module configured to process the output of the convolutional encoder at a plurality of different scales, and
- a convolutional decoder section.

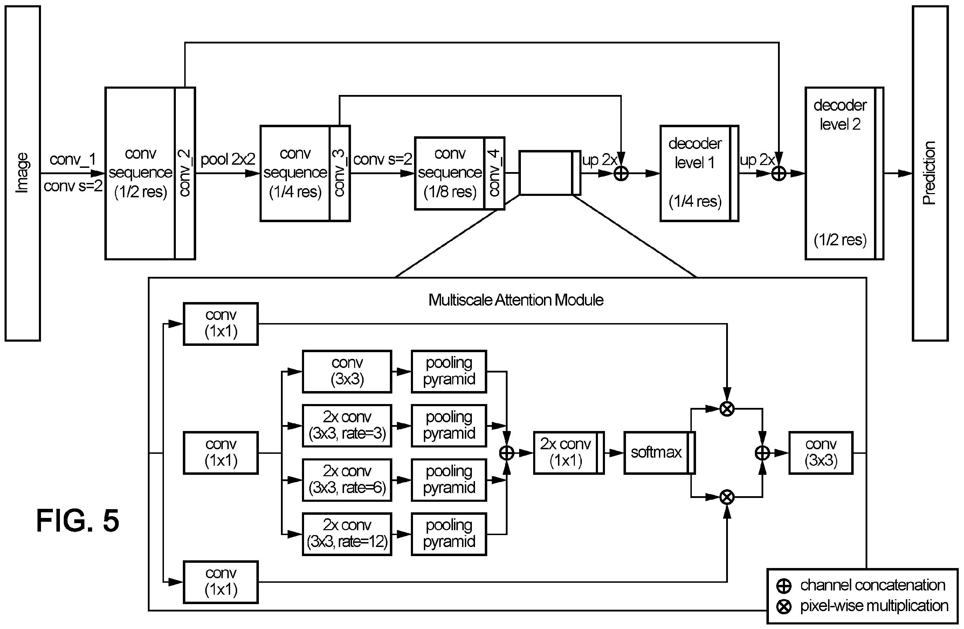

In embodiments, the neural network may be a Segmentation Multiscale Attention Network (SMANet), which structure is schematically shown in figure 5, and which is disclosed in details in the article by Simone Bonechi et AL. "Weak supervision for generating pixel-level annotations in scene text segmentation", Pattern Recognition Letters, Volume 138, 2020, Pages 1-7, ISSN 0167-8655. The convolutional encoder part of this network corresponds to a ResNet neural network, for instance ResNet50, in which the convolutions are replaced by dilated (i.e. atrous) convolutions, to enlarge the receptive field of the neural network. The multiscale module comprises a pyramid of atrous convolutions at different dilation rate, each one followed by a spatial pyramid pooling, i.e. a plurality of parallel poolings of different patch sizes. The decoder section comprises two decoder stages, with skip connections between the encoder section and the decoder section. This neural network, which have been developed for scene text segmentation, is relevant for the application of processing fluorescence image because the images containing text presents similar difficulties to identify the dimensions and positions of the letters, that for the artifacts in the present case.

Once the region of interest is extracted at step 410, the method comprises determining 420 an intensity signal of the sample from said region of interest.

Determining an intensity signal of the sample from the region of interest comprises extracting the intensity values of the pixels of the extracted region of interest, said values corresponding to an intensity of the fluorescence signal at each pixel, and inferring from said values an intensity of the fluorescence signal over the whole image from which the region of interest has been extracted by extrapolation or interpolation. According to an embodiment, this is performed by fitting a polynomial function to the intensity values of the pixels of the region of interest, and deducing from the polynomial function an approximation of the intensity values of the pixels that have been removed from the image.

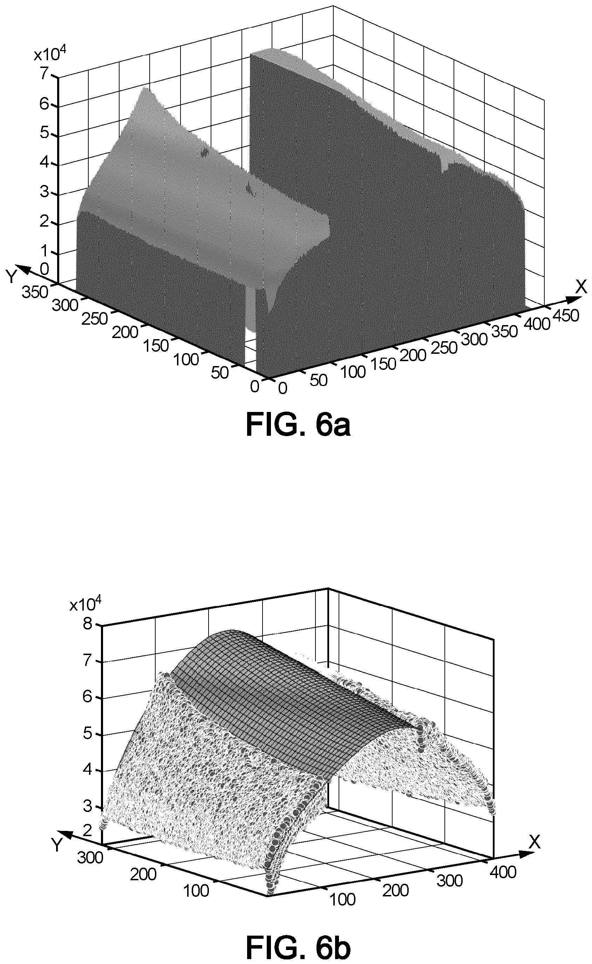

With reference to figures 6a and 6b is shown an example of the polynomial approximation performed on a region of interest, shown in three dimensions. The z axis corresponds to the measured intensity of the pixels which position on the image is defined by the coordinates (x,y). The intensity of the fluorescence signal of the region of interest is represented in figure 6a, and the polynomial function fitted to this intensity is represented by the continuous surface in figure 6b. The dots in this figure represent the original intensity values of the pixels of the region of interest.

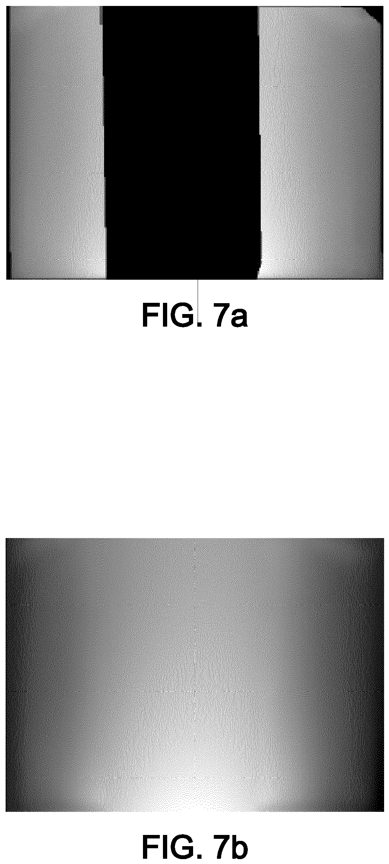

Another example is shown under a two-dimensional representation in figures 7a and 7b, where figure 7a represents the region of interest extracted from the real fluorescence image (i.e. having removed the artefacts), and figure 7b, representing a reconstructed fluorescence image in which the regions corresponding to artefacts have been replaced by pixels which values are determined according to the fitted polynomial function.

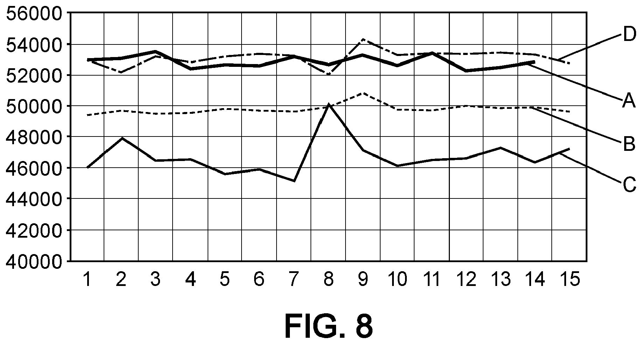

A specific experiment was designed to evaluate the effectiveness of the proposed approach. In particular, a set of fixed dilution cuvettes was collected in which the same cuvette was acquired before and after inoculation of artificial bubbles. The results are shown in figure 8, which abscissae axis represents each measured sample and the ordinates axis represents the intensity measured for a sample. It is possible to observe how the method allows to considerably improve the measurement by reducing the impact of artefacts. On this figure are represented and compared four different measurement strategies. The line A corresponds to the measurement performed in the cuvette devoid of bubbles. The line B corresponds to measurement performed after bubbles have been inserted in the cuvette, without implementing the method described above. As can be seed, the presence of defects leads to a high distance between the two measures. The line C corresponds to a measurement of the fluorescence intensity of the sample derived only from the region of interest, i.e. without estimating the values of the regions of the image that have been removed. The line D then corresponds to a measurement of the fluorescence intensity of the sample where the values of the regions containing defects have been derived from the values of the region of interest. One can observe that lines A and Dare substantially at the same level and hence that the method disclosed above allows accurate compensation of the errors induced by the presence of defects in the cuvette.

Once the polynomial function is fitted to the intensity values of the regions of interest, the fluorescence intensity of the sample can be computed from:
- the original intensity values of the pixels of the region of interest, and
- the intensity values of the pixels inside the artifacts that have been approximated by the fitting of the polynomial function.

In embodiments, the fluorescence intensity of the sample is computed as the mean of intensity values of these pixels contained in the aforesaid regions (the originally recognized region and the regions approximated by the polynomial fitting).

After the extraction of the resulting brightness value, said value is multiplied by the exposure factor, defined above, corresponding to the acquisition of the image in order to obtain the actual value of the fluorescence intensity. When a plurality of images have been acquired and one image has been selected at step 300, the value is multiplied by the exposure factor of the selected image.

## Claims

1. A method for performing fluorescence measurement on a sample, comprising:
- Illuminating (100) the sample using a light source,
- acquiring (200) at least one fluorescence image of the illuminated sample, and
- processing (400) the fluorescence image to determine a fluorescence intensity of the sample,
**characterized in that** processing the fluorescence image to determine a fluorescence intensity of the sample comprises:
- extracting (410), from the fluorescence image, a region of interest free from artefacts, by application of a trained model, and
- determining (420) the fluorescence intensity of the sample from the extracted region of interest.

2. The method according to claim 1, comprising acquiring a plurality of fluorescence images of the sample with respectively different combinations of illumination and exposures, selecting one among the plurality of fluorescence images, and processing the selected fluorescence image to determine a fluorescence intensity of the sample.

3. The method according to claim 2, wherein selecting one among the plurality of fluorescence images comprises:
- for each acquired fluorescence image, determining a number of saturated pixels, and
- selecting a fluorescence image whose number of saturated pixels is below a predetermined threshold.

4. The method according to claim 3, wherein the plurality of fluorescence images are acquired under different illumination intensities, and the selected image is the acquired fluorescence image with highest illumination intensity whose number of saturated pixels is below the predetermined threshold.

5. The method according to any of claims 2 to 4, wherein determining the fluorescence intensity of the sample comprises measuring an intensity of a fluorescence signal on the selected image, and deriving, from said intensity and the conditions of illumination and exposure of acquisition of the selected image, the fluorescence intensity of the sample.

6. The method according to any of the preceding claims, further comprising extracting, from the fluorescence image, at least one other region corresponding to at least one category of artefact.

7. The method according to any of the preceding claims, wherein determining the fluorescence intensity of the sample from the extracted region of interest comprises computing an intensity of a fluorescence signal of the regions of the fluorescence image outside the region of interest by extrapolating the intensity of the fluorescence signal of the region of interest to said regions.

8. The method according to any of the preceding claims, wherein extracting the region of interest from the fluorescence image comprises performing semantic segmentation on the fluorescence image.

9. The method according to the preceding claim, wherein extracting the region of interest comprises applying, to the fluorescence image, a trained classification model configured to classify pixels of the fluorescence image according to a plurality of classes comprising at least:
- one class corresponding to the absence of artefact, and
- at least one other class corresponding to one among the following artefacts:
∘ bubble,
∘ shadow,
∘ dust,
∘ background
and wherein the region of interest is formed by the pixels classified as corresponding to the absence of artefact.

10. The method according to any of the preceding claims, further comprising a preliminary step of training the classification model by supervised learning on a training database comprising, for each of a plurality of training fluorescence images, an identification of the areas corresponding to artefacts, wherein each trained fluorescence image is rescaled by a randomly selected factor inferior or equal to 1 and cropped to a constant size.

11. The method according to any of the preceding claims, wherein the trained model is a convolutional neural network.

12. The method according to the preceding claims, wherein the trained model is a Segmentation Multiscale Attention Network, comprising:
- A convolutional encoder,
- An intermediate module configured to process the output of the convolutional encoder at a plurality of different scales, and
- A decoder.

13. A system (1) for performing a fluorescence measurement on a sample, wherein the sample is contained in a cuvette (4), the system comprising:
- An illumination device (10) configured for illuminating the cuvette with at least one determined wavelength,
- A detection device (20) configured for acquiring at least one fluorescence image comprising fluorescence emissions of the sample consecutive to its illumination by the light source, and
- A computing device (30), configured for processing the fluorescence image to determine a fluorescence intensity of the sample,
**characterized in that** the system is configured for implementing the method according to any of the preceding claims.
